# EUROPEAN PATENT APPLICATION

(11) **EP 4 645 087 A1**
(43) Date of publication of application: **05.11.2025**
(21) Application number: 24425016.3
(22) Date of filing: 03.05.2024
(51) Int. Cl.: G06F 11/07, G06F 119/02, G05B 23/02

(54) **ON-WING PROBABILISTIC FAULT ISOLATION THROUGH USE OF MODEL-BASED SAFETY ANALYSIS**

(71) Applicant: Rockwell Collins, Inc., Cedar Rapids, IA 52498 (US)
(72) Inventor: ENSBERG, Joseph J., West Hartford, CT 06117 (US); MOHAMED, Mudathir Mahgoug Yahia, Iowa City, IA 52246 (US); LIU, Janet, Broomfield, CO 80023 (US); HOECH, Karl F., Cedar Rapids, IA 52403-3052 (US); MINOPOLI, Stefano, 80100 Napoli (NA) (IT); AMUNDSON, Issac E., Minneapolis, MN 55405 (US); ESNO, David M., Swisher, IA 52338-9421 (US); GEORGE, Christopher L., Winchester, VA 22603 (US); YOUNG, David, Garden Ridge, TX 78266 (US)
(74) Representative: Dehns

(57) **Abstract**

A method may obtain a failure propagation model, wherein the failure propagation model comprises: a model representation of a plurality of hardware components, a set of hardware failure probabilities; and a logic that maps signals to the hardware components. A method may receive an alert signal from the aircraft. A method may map the alert signal to the plurality of hardware components. A method may perform a root-cause diagnosis of the alert signal that has been mapped to the plurality of hardware components comprising: determining via the failure propagation model, one or more combinations of hardware failures associated with the alert signal; and determining a probability of occurrence associated with the combinations of hardware failures. A method may display a report that includes combinations of hardware failures associated with the alert signal and the probability of occurrence associated with the combinations of hardware failures.

## Description

### BACKGROUND

Modern aircraft are often susceptible to complex, cascading failure modes that are difficult to troubleshoot, and is one reason why specific types of aircraft require two pilots. For example, during a complex failure involving a two-pilot aircraft (e.g., part 25 aircraft), one pilot will fly the aircraft while the other pilot tries to diagnose the root cause of the problem. Once the root cause and associated corrective action are agreed to by both pilots, both pilots will begin reconfiguring the aircraft based on the relevant pre-defined checklists. A single pilot would have difficulty diagnosing the root cause of a problem while flying an aircraft.

Currently, designs of single-pilot aircraft are continually becoming more complex, and there is pressure in the industry to reduce the number of pilots needed to fly aircraft as a cost-cutting measure. Therefore, there is a need for a system and method to efficiently find the root cause for aircraft-related problems in real-time, such as a system and method that will enable a single pilot to both troubleshoot problems in flight and safely fly the aircraft. Such a system and method may also be utilized by other downstream services such as maintenance crews for consideration when determining appropriate action.

### SUMMARY

In some aspects, the techniques described herein relate to a method for providing fault isolation in an aircraft in real-time including: obtaining a failure propagation model, wherein the failure propagation model includes: a model representation of a plurality of hardware components and connections through which failures can propagate; a set of hardware failure probabilities associated with one or more hardware components of the plurality of hardware components; and a logic that maps alert signals to the one or more components of the plurality of hardware components; receiving an alert signal from the aircraft; performing a root-cause diagnosis of the alert signal that has been mapped to the plurality of hardware components, wherein performing the root-cause diagnosis includes: determining via the failure propagation model, one or more combinations of hardware failures associated with the alert signal; and determining a probability of occurrence associated with the one or more combinations of hardware failures; and displaying a report that includes one or more combinations of hardware failures associated with the alert signal and the probability of occurrence associated with the one or more combinations of hardware failures.

In some aspects, the techniques described herein relate to a method, wherein performing a root-cause diagnosis further includes receiving aircraft state information for use in the root cause diagnosis.

in some aspects, the techniques described herein relate to a method, wherein the failure propagation model is built using Architecture Analysis and Design Language (AADL).

In some aspects, the techniques described herein relate to a method, wherein the probability of occurrence associated with the one or more combinations of hardware failures are calculated via MBSA analysis tooling.

In some aspects, the techniques described herein relate to a method, wherein the MBSA analysis tooling includes Architectural Modeling and Analysis for Safety Engineering (AMASE) software.

In some aspects, the techniques described herein relate to a method, wherein the alert signal includes a Crew Alerting System (CAS) message.

In some aspects, the techniques described herein relate to a method, wherein determining via the failure propagation model one or more combinations of hardware failures associated with the alert signal includes generating minimal cut sets (MCSs). MCSs capture the minimal combination of hardware failures causing the failure condition.

In some aspects, the techniques described herein relate to a method, wherein the alert signal is transferred via a Message Queuing Telemetry Transport (MQTT) broker.

In some aspects, the techniques described herein relate to a method, wherein the report includes: a root cause of failure based on the one or more combinations of hardware failures associated with the alert signal; and a probability that the root cause of failure is correct, based on the probability of occurrence associated with the one or more combinations of hardware failures.

In some aspects, the techniques described herein relate to a method, wherein the report further includes: a representation of the aircraft; and a marked region within the representation of the aircraft implicated in the root cause of failure.

In some aspects, the techniques described herein relate to a method, wherein the report further includes: a representation of a system of the aircraft; and a marked component within the representation of the system implicated in the root cause of failure.

In some aspects, the techniques described herein relate to a method, wherein the method is performed while the aircraft is in-flight.

In some aspects, the techniques described herein relate to a system including: at one or more processors communicatively coupled to: an alert sub-system configured to transmit an alert signal mappable to one or more hardware components of a plurality of hardware components of a vehicle; and a display, the one or more processors configured to: obtain a failure propagation model, wherein the failure propagation model includes: a model representation of the plurality of hardware components and connections through which failures can propagate; a set of hardware failure probabilities associated with one or more hardware components of the plurality of hardware components; and a logic that maps alert signals to the one or more hardware components of the plurality of hardware components; receive an alert signal from the alert sub-system; perform a root-cause diagnosis of the alert signal that has been mapped to the one or more hardware components of the plurality of hardware components, wherein performing the root-cause diagnosis includes: determining via the failure propagation model, one or more combinations of hardware failures associated with the alert signal; and determine a probability of occurrence associated with the one or more combinations of hardware failures; and transmit to the display a report including the one or more combinations of hardware failures associated with the alert signal and the probability of occurrence associated with the one or more combinations of hardware failures.

In some aspects, the techniques described herein relate to a system, further including a MBSA analysis tooling configured to perform one or more steps of the root-cause diagnosis via the one or more processors.

In some aspects, the techniques described herein relate to a system, wherein the MBSA analysis tooling includes Architectural Modeling and Analysis for Safety Engineering (AMASE) software.

In some aspects, the techniques described herein relate to a system, wherein determining via the failure propagation model one or more combinations of hardware failures associated with the alert signal includes generating minimal cut sets.

In some aspects, the techniques described herein relate to a system, further including the vehicle.

In some aspects, the techniques described herein relate to a system, wherein the vehicle includes an aircraft.

In some aspects, the techniques described herein relate to a system, further including the alert sub-system.

In some aspects, the techniques described herein relate to a system, wherein the failure propagation model is built using Architecture Analysis and Design Language (AADL).

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1 is a block diagram illustrating the components of a system 100 for providing probabilistic real-time fault isolation, in accordance with one or more embodiments of the disclosure.
FIG. 2 is a diagram illustrating an MBSA analysis performed in response to CAS messages, in accordance with one or more embodiments of the disclosure.
FIG. 3 is a diagram illustrating an MBSA analysis performed in response to CAS messages, in accordance with one or more embodiments of the disclosure.
FIG. 4 is a flow diagram illustrating how messages are exchanged within the system, in accordance with one or more embodiments of the disclosure.
FIGS. 5A-5B illustrate views of a report of an MBSA analysis as displayed on a GUI, in accordance with one or more embodiments of the disclosure.
FIG. 6 is a flow diagram illustrating a method for providing fault isolation in an aircraft in real-time, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Broadly, embodiments of the concepts disclosed herein are directed to a method and system for providing fault isolation in an aircraft in real-time is disclosed. The method and system include means for receiving alert messages (e.g., Crew Alerting System (CAS) messages) and the use of model-based safety analysis (MBSA) to perform root-cause diagnosis (probabilistic fault determination) in real-time. CAS messages can be directly or indirectly triggered by aircraft hardware component failures that have failure modes and associated failure probabilities (computed by failure rates and exposure time). The failure propagation model captures representations of the hardware components, their failure modes and failure probabilities, and the failure propagation logic through the physical connections, and the annunciation logic that maps system signals to CAS messages. The MBSA analysis performed on the MBSA model determines the root cause of the alerts, ranks them by probability of occurrence, and conveys to the operator, pilot, or other responsible system, the most likely system or system hardware component failure modes associated with the alerts. The operator/pilot can then focus on resolving the alert based on the most probable cause of the alert. The method and system enable the pilot of a single-pilot aircraft to safely address problems during flight and may enable aircraft originally required to utilize multiple pilots for flight to reduce the number of pilots needed to operate the aircraft.

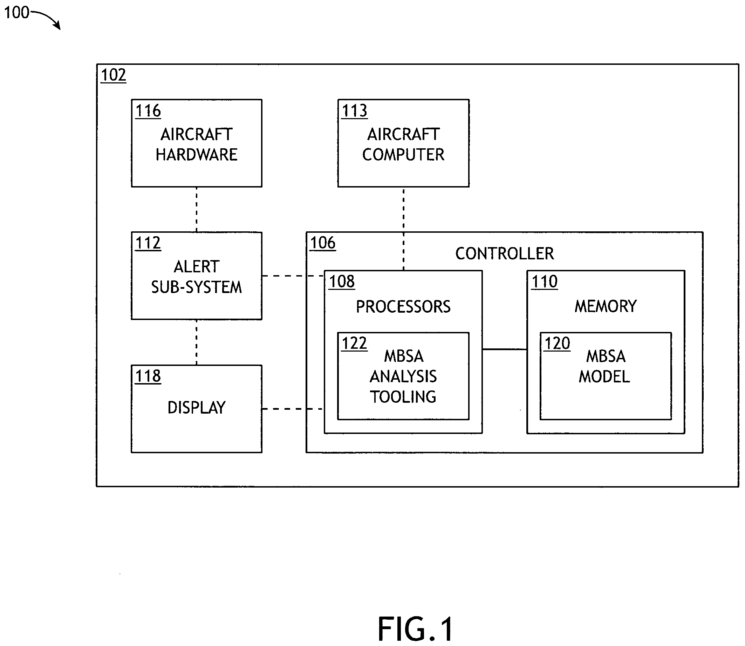

Referring now to FIGS. 1-6, embodiments of a system 100 according to the inventive concepts are depicted. FIG. 1 is a block diagram illustrating the components of a system 100 for providing probabilistic real-time fault isolation, in accordance with one or more embodiments of the disclosure. The system 100 may be implemented as any suitable system, such as at least one vehicle (e.g., an aircraft 102, a spacecraft, an automobile, a watercraft, a submarine, or a train). For example, as shown in FIG. 1, the system 100 may include an aircraft 102.

In embodiments, the system 100 includes a controller 106. The controller 106 includes one or more processors 108 and memory 110. The memory 110 is configured to maintain program instructions configured to cause the one or more processors 108 to carry out any of the one or more process steps described throughout the present disclosure. In some embodiments, the one or more processors 108 are configured to receive information from one or more aircraft computers 113.

In embodiments, the system 100 includes an alert sub-system 112 configured to identify problems within one or more systems or system components (e.g., aircraft hardware 116) within the aircraft 102, and transmits alerts detailing information regarding the identified problems to the one or more processors 108. The alert sub-system 112 may include any type of alerting system including, but not limited to, a crew alerting system (CAS) or engine indicating and crew alerting system (EICAS).

In embodiments, the system 100 includes a display 118 configured to display alert reporting information from the one or more processors. The display 118 may include any type of display capable of displaying alert reporting information. The display 118 may also display alerts directly from the alert sub-system 112. In embodiments, the system 100 includes the controller 106 (e.g., which includes the one or more processors 108 and memory 110). The system 100 may also include the controller 106 and one or more of the aircraft hardware 116, the alert sub-system 112, the aircraft computer 113, and the display 118.

In embodiments, the system 100 includes a model-based safety analysis (MBSA) model 120 (e.g., a failure propagation model). The MBSA model 120 includes a representation of aircraft hardware 116 onboard the aircraft 102 along with aspects of the aircraft hardware 116 (e.g. such as physical connections) through which failures can propagate. Within the system 100, the MBSA model 120 is used via MBSA methodology to perform on-wing or in-flight probabilistic fault isolation in real-time.

MBSA, as used herein, generally describes a practice where the system architecture and its dysfunctional behavior are captured in a "failure propagation model". The model is analyzed using suitable computational tools to generate a consistent set of safety artifacts, such as minimal cut sets (MCSs). MCSs capture the minimal combination of hardware failures causing the failure condition.

In embodiments, software applications and tools are used to perform analyses on the MSBA model 120 to generate outputs that can be reported to the pilot. These analyses may include new data provided by the alert sub-system 112 (e.g., CAS messages), the aircraft hardware 116, and other state information, such as weight-on-wheels, position, and speed, as retrieved by the aircraft computer 113 and other aircraft sensors.

In embodiments, the MBSA model 120 is developed or built via one or more modeling languages. In particular, the MBSA model 120 may be written in Architecture Analysis and Design Language (AADL).

In embodiments, the system 100 is configured to receive, determine, and/or implement hardware failure probabilities for one or more components of the aircraft hardware 116 and failure modes for the one or more components of the aircraft hardware 116. For example, the system 100 may receive CAS messages on-wing, and then use minimal cut sets (e.g., determined on-wing or off-wing) to determine the combination of hardware failures or modes or hardware failures that may be responsible for the CAS messages. These combinations are then ranked by their probability of occurrence.

As used herein, "aircraft hardware" 116 may include any system, sub-system, or component capable of having a calculatable failure rate. For example, aircraft hardware 116 may include, but not be limited to, braking systems, line replaceable units (LRUs), fire-extinguishing systems, navigation systems, landing systems, and engine systems.

in embodiments, the system 100 includes logic that enables the signals from aircraft systems and/or aircraft hardware to be mapped to alert signals (e.g., the alert signals are mappable to one or more hardware components of the aircraft hardware 116, such as alert signals associated with the alert sub-system 112. For example, one or more processors 108 of the system 100 may include an MBSA analysis tooling 122 configured to receive annunciated CAS messages from the alert sub-system 112, invoke an analysis of the CAS messages on the MBSA model 120, and compute MCSs based in the analysis. The MBSA analysis tooling 122 may then rank the MCSs by failure probabilities and report them to the pilot. For example, the one or more processors 108 executing the MBSA analysis tooling 122 may receive a low fuel alert. The MBSA analysis tooling 122 may then interrogate the MBSA model 120 to determine possible MCSs responsible for the CAS message (e.g., a failed fuel gauge or a fuel tank rupture) and rank them by their failure probabilities. For example, the MBSA analysis tooling 122 may determine that the fuel gauge has a higher failure probability than a fuel tank. The MBSA analysis tooling 122 may then report/transmit the MCSs and failure probabilities to the display 118 or other human/machine interface.

Accordingly, the system 100, using MBSA methodology and the MSBA model 120 can receive both CAS messages and aircraft-state information while in-flight and perform analysis to determine a set of combinations of hardware failures that are responsible for the CAS messages. The joint probability of occurrence for all implicated hardware combinations is computed, via the one or more processors 108, using the propagated hardware failure rates. The resultant combinations of hardware failures and hardware failure probabilities (e.g., also referred to as root-cause information or probabilistic root-cause information), are then presented to the pilot or other downstream service for consideration when determining appropriate corrective action.

The reported hardware probabilities may be filtered by a threshold (e.g., a predetermined threshold) so that combinations with a considerably low probability of being responsible for the alert would be excluded from the report. The removal of low-probability events would likely be helpful to the pilot who is assessing the list of combinations while operating the aircraft 102.

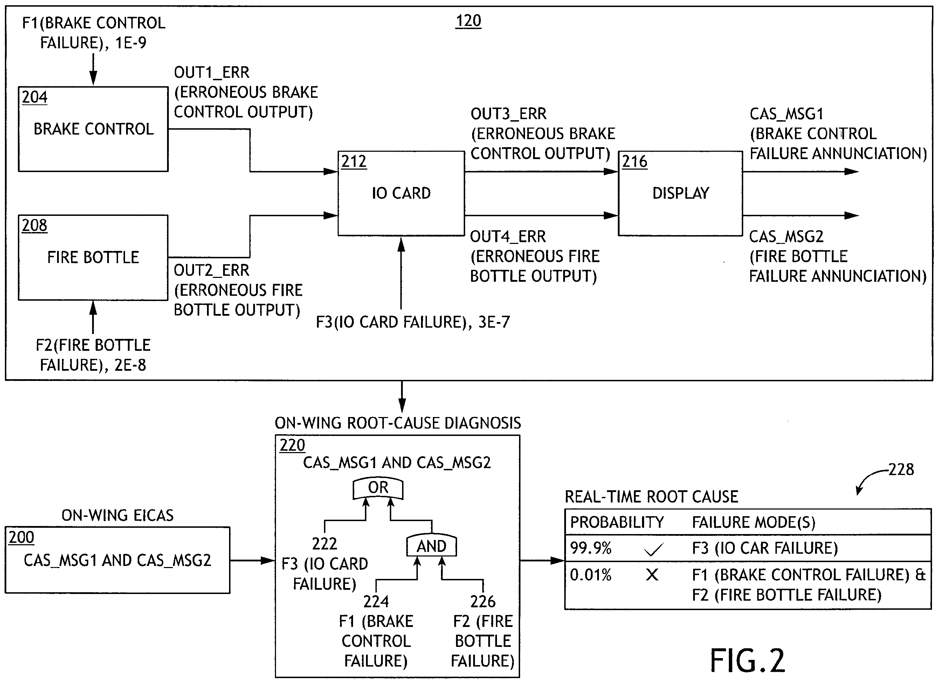

An example of the system 100 performing an in-flight analysis and response to CAS messages 200 is shown in FIG 2, in accordance with one or more embodiments of the disclosure. In this example, the EICAS (e.g., alert sub-system 116) has sent out two alert messages: message "CAS_Msg1" warning of a brake control failure, and "CAS_Msg2", warning of a fire bottle failure. The MBSA analysis tooling 122 of the one or more processors 108 receive notice of the EICAS messages and checks the MSBA model 120 for knowledge of both the brake control 204 and the fire bottle 208, including component connectivity for both hardware components as well as failure probabilities. As shown in FIG. 2, the MSBA model 120 reports/illustrates that the brake control 204 and fire bottle 208 are communicatively coupled to an input/output (IO) card 212 that is also communicatively coupled to a display 216. The IO card 212 is configured to determine if there is a fault with either the brake control 204 or the fire bottle 208 (e.g., erroneous output), and report this information to the display 216, which displays the fault information as an alert (e.g., failure annunciation). This arrangement of the brake control 204, the fire bottle 208, and the IO card 212 is such that there are at least two possible conditions that would result in the CAS messages 200 being sent by the sub-alert system 116: the brake control 204 and the fire bottle 208 simultaneously faulting, or the IO card 212 faulting by itself.

Once the MBSA model 120 has been checked, the MBSA analysis tooling 122 generates the MCSs associated with the CAS messages 200, along with failure probabilities of each MCS. In this manner, the MBSA analysis tooling may map CAS messages to associated root causes (e.g., via an on-wing root cause diagnosis). For example, and as shown in panel 220, the CAS message 200 is visualized as being a cause of an IO card failure 222 or the combined cause of a brake control failure 224 and a fire bottle failure 224. Because fault probabilities for each MCS has been evaluated, failure probabilities are be ranked (e.g., ranked by joint probability of occurrence) and displayed as root causes, as displayed in panel 228. For example, the system 100 may determine that the probability that the CAS messages 200 are due to a failure of both the brake control 204 and the fire bottle is low (e.g., less than 0.1 %) and may determine that the probability that the CAS messages are due to a failure of the IO card 212 is high (e.g., greater than 99.0%). The system 100 can identify hardware combinations that are potentially associated with the alert messages, and calculate the probability of root causes in real time.

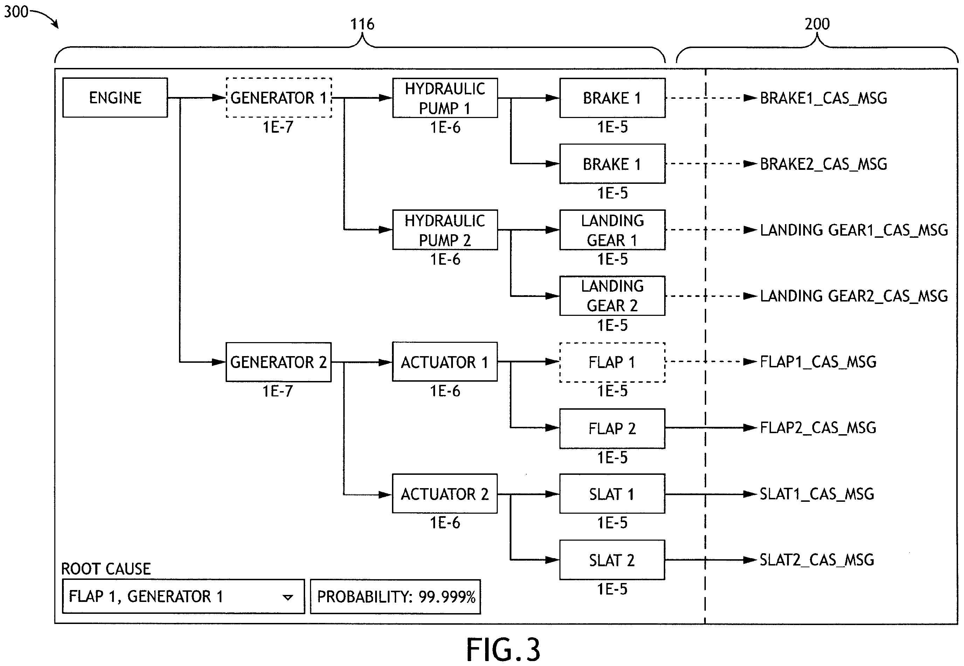

An example of using the MBSA analysis tooling 122 and MBSA model 120 to determine a root cause of two independent failures is shown in panel 300 of FIG. 3, in accordance with one or more embodiments of the disclosure. The panel 300 illustrates a visualization of MBSA analysis results, and includes a set of aircraft hardware 116, each assigned a static failure rate, and connections between the aircraft hardware 116 visualized (e.g., the model is such that if a component fails, all downstream components will go offline). Also shown is a set of potential CAS messages 200 that are delivered when components at the lowest hierarchal level appear to be faulty, with actual delivered CAS messages 200 indicated as dotted lines with arrows. For example, in a specific time period, "Generatorl" may be at fault, resulting in four components of aircraft hardware 116 (e.g., "Brake1", "Brake2", "LandingGear1", "LandingGear2") appearing to be faulty (e.g., as indicated by the dotted border), resulting in the delivery of respective CAS messages 200. Simultaneously, "Flap1" may be faulty, but will only result in a single "Fiap1 " CAS message 200 being delivered due to "Flap1 " being on the lowest hierarchical level. Because the aircraft is receiving all five CAS messages 200 at once, it may not be inherent to the pilot the exact nature of the failures. For example, the CAS messages 200 may appear to the pilot that all five components of the aircraft hardware 116 (e.g., "Brake1", "Brake2", "LandingGear1", "LandingGear2" and "Flap1) are at fault. However, by the checking MSBA model 120 via the MBSA analysis tooling, the most probable combination of the aircraft hardware 116 at fault (e.g., "Flap-1" and "Generator1") is identified and reported.

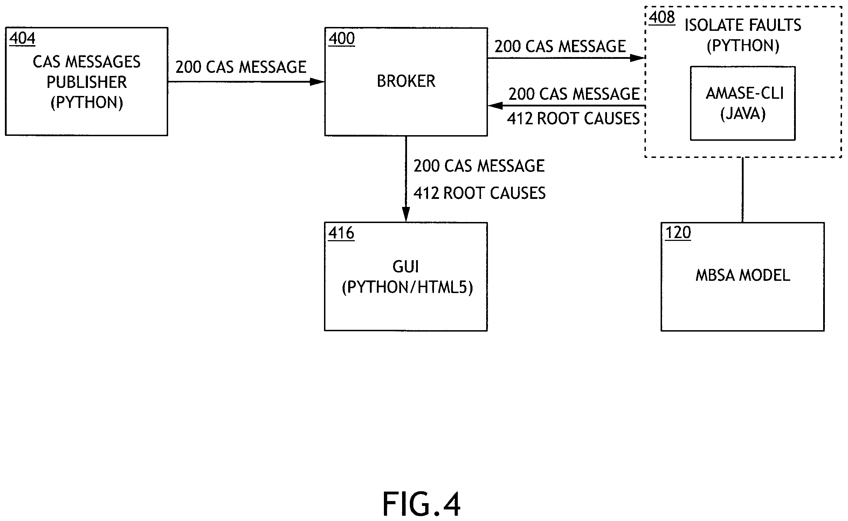

In embodiments, the system 100 utilizes one or more containerized microservices for exchanging information, as illustrated in FIG. 4, in accordance with one or more embodiments of the disclosure. The containerized microservices may be executed wholly or in part via the one or more processors 108 and may include other system components including but not limited to the alert sub-system 112 and the aircraft computer 113.

In embodiments, information exchanges (e.g., such as CAS messages 200 transmissions) are coordinated via a brokered or brokerless system. For example, the system 100 may exchange or transfer information via a Message Queuing Telemetry Transport (MQTT) broker 400. Responsibilities of the broker 400 include receiving and filtering messages, identifying endpoints (e.g., clients) that are subscribed to each message, and sending messages to these endpoints.

Referring to FIG. 4, CAS messages 200 are first initiated by a publishing application 404 and sent to the broker 400. The broker 400 then directs the CAS messages 200 to the MBSA analysis tooling 122 for checking the MBSA model 120 and determining the root causes behind the CAS messages 200. For example, the MBSA analysis tooling 122 may be used to perform one or more steps as illustrated in FIGS. 2-3. The MBSA analysis tooling 122 may include software that performs MBSA-related tasks including, but not limited to, Architectural Modeling and Analysis for Safety Engineering (AMASE), an AADL-based system/software that supports modeling and analysis of system behavior under failure conditions. A command line interface version of AMASE (AMASE-CLI) may also be used. Once the MBSA analysis tooling 122 has determined one or more probable root causes 412 behind the CAS message 200, the one or more probable root causes 412 and the CAS messages 200 are sent back to the broker 400, which relays the root causes 412 and the CAS messages 200 to a graphical user interface (GUI) 416 shown on the display 118 or other interface devices. Computer languages used for writing the applications used for coordinating, analyzing, and displaying the CAS messages 200 may include Python (e.g., for the publishing application 404, the GUI 416, and for enabling interactivity with AMASE), and Java (for AMASE command aspects and/or AMASE integration within the system 100).

As described above, within the system 100, CAS messages 200 are published to the broker 400 (e.g., an MQTT broker 400) as they occur. A micro-service may then retrieve the CAS messages 200 from the broker 400 and update MBSA model files (e.g., by updating model source code within the MBSA model 120) based on the CAS messages 200, or other associated information. Once the MBSA model 120 has been updated, the MBSA analysis tooling 122 (e.g., also referred to as an MBSA solver) will be executed to identify failures of the aircraft hardware 116, along with the corresponding probabilities.

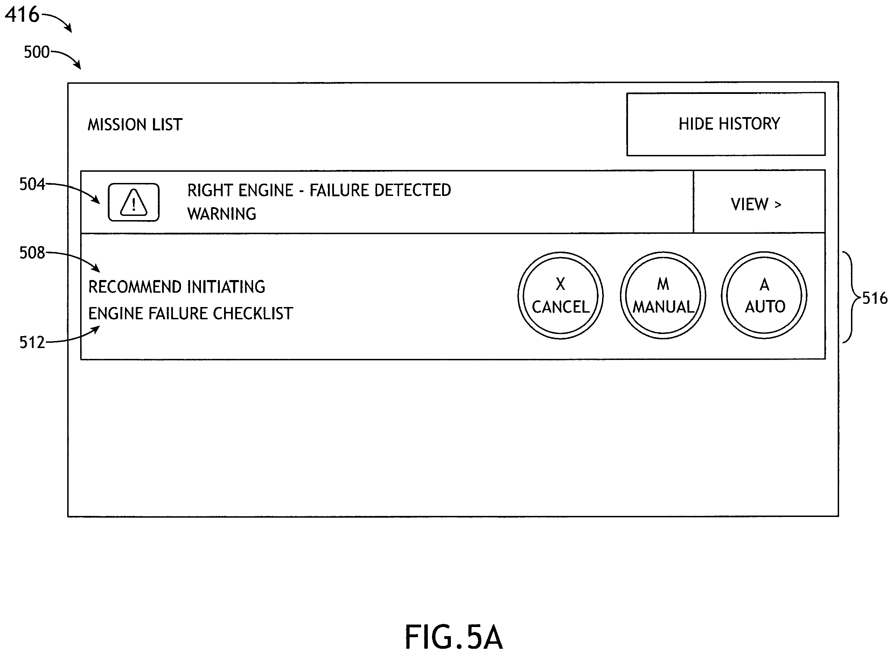

Example views of displayed information (e.g., reports) from the system 100, such as views of the GUI 416 as displayed during a scenario where multiple CAS messages 200 are received, are shown in FIGS. 5A-5B, in accordance with one or more embodiments of the disclosure. Referring to FIG. 5A, a view 500 of the GUI 416 may comprise a CAS warning icon 504 stating/inferring that one or more CAS messages 200 have been received. The view 500 may also include a recommendation 508, indicating that the one or more CAS messages 200 have been analyzed, that a root cause 412 of the one or more CAS messages 200 has been determined (e.g., based on the MBSA methodology and MBSA model 120), and that a corrective action has been identified. In this view 500, the system provides a checklist 512, or link to the checklist 512, associated with the corrective action that the pilot may access to learn more about the recommendation 508. The view 500 may include a set of one or more buttons 516 that enable the pilot to view the recommendation 508, the fault, or a next page of the report.

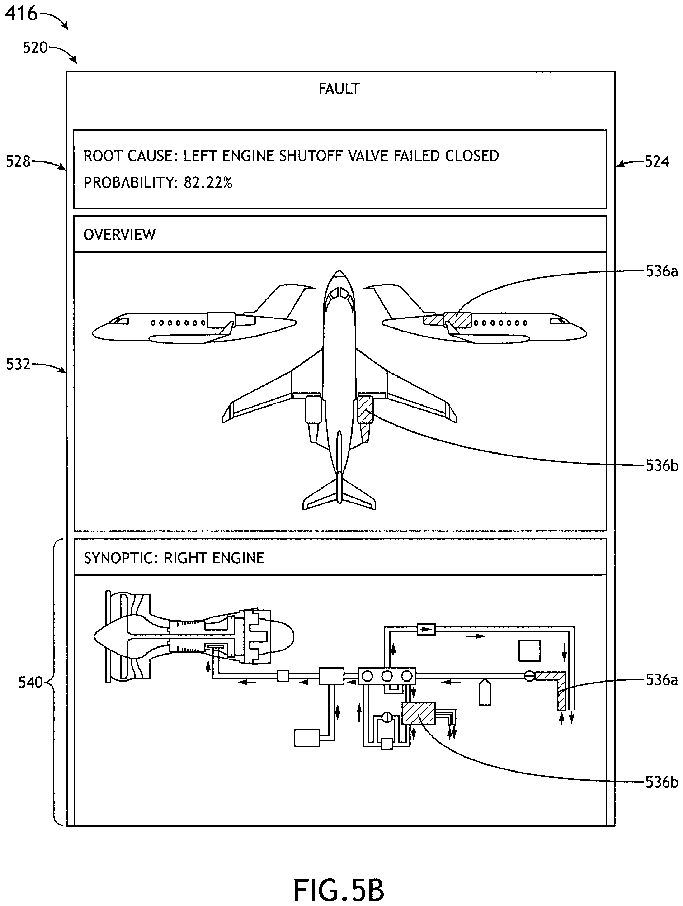

Referring to FIG. 5B, a view 520 of the GUI 416 may include a root cause of failure statement 524 (e.g., "left engine shutoff valve failed closed") and a probability 528 generated by the system 100 that the root cause of failure statement 524 is correct. The view 520 may include one or more representations 532 of the aircraft 102, with the section, system, or component of the aircraft 102 associated with the root cause of failure statement 524 indicated (e.g., as region of the representation 532 marked via shaded areas 536a-b).

In embodiments, the view 520 includes a close-up view 540 of the aircraft hardware 116 (e.g., right engine) associated with the root cause of failure statement 524. The specific hardware components associated with the root cause of failure statement 524 (e.g., hardware components causing, or impacted by, the root cause 412) may be further indicated (e.g., marked via shaded areas 536a-b).

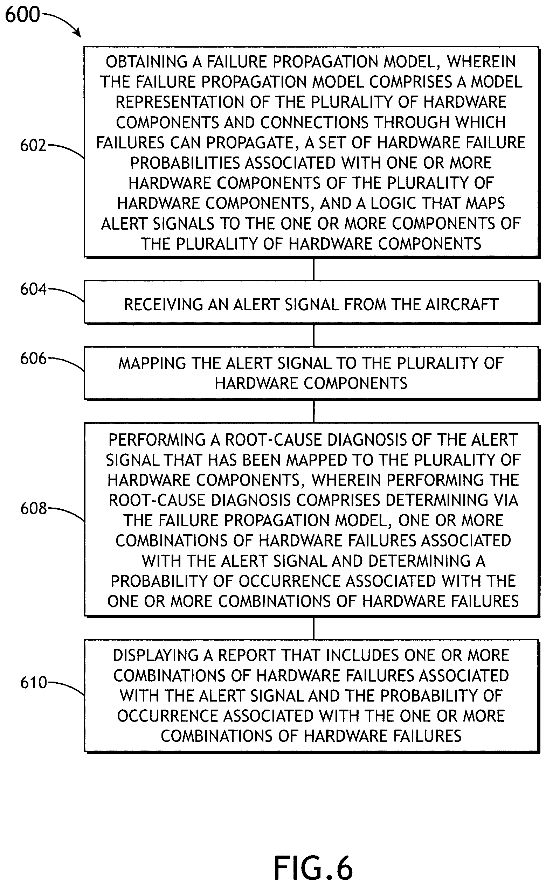

In embodiments, a method 600 for providing fault isolation (e.g., probabilistic fault isolation) in an aircraft 102 in real-time is disclosed, as illustrated in FIG. 6. The method 600 is based on MBSA methodology and the MBSA model 120 and is philosophically aligned with existing certification requirements by virtue of its physics-based models (e.g., the MBSA model 120).

In embodiments, the method 600 includes a step 602 of obtaining a failure propagation model (e.g., MSBA model 120), wherein the failure propagation model comprises a model representation of a plurality of hardware components (aircraft hardware 116, or components of aircraft hardware 116) of the aircraft 102 and connections through which failures can propagate, a set of hardware failure probabilities associated with one or more hardware components of the plurality of hardware components, and a logic that maps alert signals to the one or more components of the plurality of hardware components.

In embodiments, the method 600 includes a step 604 of receiving an alert signal (e.g., CAS message 200) from the aircraft 102 (e.g., from the alert sub-system 112). In embodiments, the method includes a step 606 of mapping the alert signal to the plurality of hardware components.

In embodiments, the method includes a step 608 of performing a safety analysis or root cause diagnosis (e.g., via MBSA methodology) of the alert signal that has been mapped to the plurality of hardware components, wherein performing the root cause diagnosis comprises: determining via the failure propagation model, one or more combinations of hardware failures associated with the alert signal and determining a probability of occurrence associated with the one or more combinations of hardware failures. The root-cause diagnosis may be performed via the MBSA analysis tooling 122 (e.g., AMASE) and the one or more processors 108. Aspects of the root-cause diagnosis may also be performed by one or more components of the system 100 (e.g., the aircraft computer 113, and alert sub-system 112) with some aspects being performed off-wing (e.g., via a maintenance computer). In embodiments, performing a root-cause diagnosis may further include receiving aircraft state information for use in the root-cause diagnosis.

In embodiments, the method 600 includes a step 610 of displaying (e.g., via a display 118, GUI 416, or other interface) a report to an operator (e.g., a pilot or downstream service) the one or more combinations of hardware failures associated with the alert signal and the probability of occurrence associated with the one or more combinations of hardware failures.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

The at least one processor 108 may be implemented as any suitable processor(s), such as at least one general purpose processor, at least one central processing unit (CPU), at least one image processor, at least one graphics processing unit (GPU), at least one field-programmable gate array (FPGA), and/or at least one special purpose processor configured to execute instructions for performing (e.g., collectively performing if more than one processor) any or all of the operations disclosed throughout. For example, the one or more processors 108 may be configured to run various software applications or computer code stored in a non-transitory computer-readable medium (e.g., memory 110) and configured to execute various instructions or operations.

As used throughout and as would be appreciated by those skilled in the art, "memory" may refer to as at least one non-transitory computer-readable medium (e.g., e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A method for providing fault isolation in an aircraft in real-time comprising:
obtaining a failure propagation model, wherein the failure propagation model comprises:
a model representation of a plurality of hardware components and connections through which failures can propagate;
a set of hardware failure probabilities associated with one or more hardware components of the plurality of hardware components; and
a logic that maps alert signals to the one or more components of the plurality of hardware components;
receiving an alert signal from the aircraft;
mapping the alert signal to the plurality of hardware components;
performing a root-cause diagnosis of the alert signal that has been mapped to the plurality of hardware components, wherein performing the root-cause diagnosis comprises:
determining via the failure propagation model, one or more combinations of hardware failures associated with the alert signal; and
determining a probability of occurrence associated with the one or more combinations of hardware failures; and
displaying a report that includes one or more combinations of hardware failures associated with the alert signal and the probability of occurrence associated with the one or more combinations of hardware failures.

2. The method of claim 1, wherein performing a root-cause diagnosis further includes receiving aircraft state information for use in the root-cause diagnosis.

3. The method of claim 1, wherein the failure propagation model is built using Architecture Analysis and Design Language (AADL).

4. The method of claim 1, wherein the probability of occurrence associated with the one or more combinations of hardware failures are calculated via MBSA analysis tooling.

5. The method of claim 4, wherein the MBSA analysis tooling includes Architectural Modeling and Analysis for Safety Engineering (AMASE) software.

6. The method of claim 1, wherein the alert signal comprises a Crew Alerting System (CAS) message.

7. The method of claim 1, wherein determining via the failure propagation model one or more combinations of hardware failures associated with the alert signal comprises generating minimal cut sets.

8. The method of claim 1, wherein the alert signal is transferred via a Message Queuing Telemetry Transport (MQTT) broker.

9. The method of claim 1, wherein the report comprises:
a root cause of failure based on the one or more combinations of hardware failures associated with the alert signal; and
a probability that the root cause of failure is correct, based on the probability of occurrence associated with the one or more combinations of hardware failures.

10. The method of claim 9, wherein the report further comprises:
a representation of the aircraft; and
a marked region within the representation of the aircraft implicated in the root cause of failure.

11. The method of claim 9, wherein the report further comprises:
a representation of a system of the aircraft; and
a marked component within the representation of the system implicated in the root cause of failure.

12. The method of claim 1, wherein the method is performed while the aircraft is in-flight.

13. A system comprising:
at one or more processors communicatively coupled to:
an alert sub-system configured to transmit an alert signal mappable to one or more hardware components of a plurality of hardware components of a vehicle; and
a display, the one or more processors configured to:
obtain a failure propagation model, wherein the failure propagation model comprises:
a model representation of the plurality of hardware components and connections through which failures can propagate;
a set of hardware failure probabilities associated with one or more hardware components of the plurality of hardware components; and
a logic that maps alert signals to the one or more hardware components of the plurality of hardware components;
receive an alert signal from the alert sub-system;
map the alert signal to the one or more hardware components of the plurality of hardware components;
perform a root-cause diagnosis of the alert signal that has been mapped to the one or more hardware components of the plurality of hardware components, wherein performing the root-cause diagnosis comprises:
determining via the failure propagation model, one or more combinations of hardware failures associated with the alert signal; and
determine a probability of occurrence associated with the one or more combinations of hardware failures; and
transmit to the display a report comprising the one or more combinations of hardware failures associated with the alert signal and the probability of occurrence associated with the one or more combinations of hardware failures.

14. The system of claim 13, further comprising a MBSA analysis tooling configured to perform one or more steps of the root-cause diagnosis via the one or more processors.

15. The system of claim 14, wherein the MBSA analysis tooling comprises Architectural Modeling and Analysis for Safety Engineering (AMASE) software.

16. The system of claim 13, wherein determining via the failure propagation model one or more combinations of hardware failures associated with the alert signal comprises generating minimal cut sets.

17. The system of claim 13, further comprising the vehicle.

18. The system of claim 17, wherein the vehicle comprises an aircraft.

19. The system of claim 13, further including the alert sub-system.

20. The system of claim 13, wherein the failure propagation model is built using Architecture Analysis and Design Language (AADL).
